# EUROPEAN PATENT APPLICATION

(11) **EP 2 104 318 A1**
(43) Date of publication of application: **23.09.2009**
(21) Application number: 08005394.5
(22) Date of filing: 21.03.2008
(51) Int. Cl.: H04L 29/12, H04L 29/08

(54) **Notification service**

(71) Applicant: Koninklijke KPN N.V., 2516 CK The Hague (NL); Nederlandse Organisatie voor Toegepast-Natuurwetenschappelijk Onderzoek TNO, 2628 VK Delft (NL)
(72) Inventor: Joosten, Hendricus Johannes Maria, 9861 TJ Groote Gast (NL); Van der Veer, Robert, 2332 BD Leiden (NL)
(74) Representative: Wuyts, Koenraad Maria

(57) **Abstract**

Upon detecting the presence of an object within a system, the service provider knows that a person with this object is present in the system. In order to notify the person of events relevant to him/her, the provider uploads the object's identifier to a service that is capable of associating a network address with this identifier. The provider's message about the event is then routed to the network address.

## Description

### FIELD OF THE INVENTION

The invention relates to a method of providing a service on a communication network.

### BACKGROUND ART

In current society, people tend to use increasingly more frequently mobile electronic devices on a daily basis, for personal or job-related purposes. Examples of such mobile electronic devices are mobile telephones, laptop computers, palmtop computers, electronic access cards, navigation aids, MP3 players or multimedia players, etc. The collection of mobile electronic devices used by an individual is referred to below as the individual's "personal network" (PN).

PNs represent an interesting opportunity for both the public and service providers aiming at providing information services or data services to a person via the person's PN.

Published international application WO02080132 discloses a notification service on a transportation system. Users of this service register with this service their identity and their contact information, e.g., their mobile telephone number. A registered user is notified in real time, e. g., while on the move, of updates regarding his/her itinerary via a personal device, e. g., a pager or cell phone. Notifications can be sent as, e.g., SMS messages, voice mails from help-desk operators or via a voice synthesizing server, etc.

### SUMMARY OF THE INVENTION

The inventors propose a method of providing a service on a communication network. The method comprises: receiving an identifier of an object that is not configured for communicating with the network; receiving a request for delivering a message to a party associated with the identifier; associating the identifier with a network address; and forwarding the message to the network address. The service in the invention now routes or otherwise forwards the message to people, who have been indirectly selected via the identifier(s) of the object(s). The delivering of the information is to, or on behalf of, a party identified by the identifier of the object.

In contrast to published international application WO02080132, the inventors consider a service for delivering data or information to people without the data provider or information provider having access to the contact information of these people. The availability of contact information to others may raise concerns about privacy issues. Also, contact information may be getting obsolete, and users may forget to notify the individual service providers, as the one in WO0208132, of their changed contact information.

In a further embodiment, the associating comprises: consulting a data base that associates the identifier with at least one URI; and determining via DNS a network address on the basis of the URI. This configuration allows the service provider in the invention to efficiently select the protocol and format of the information to be communicated. Accordingly, this embodiment of the invention advocates a more centralized approach so that multiple information providers can be serving a plurality of users via the service in the invention.

As known, a URI is a string of characters used to identify or name a resource. The identification enables interaction with representations of the resource over a network, e.g., the Internet, using specific protocols. URI's have a specific syntax for a specific protocol. A URI can be considered a locator or a name or both. A Uniform Resource Locator (URL) is a URI that, in addition to identifying a resource, provides means of acting upon or obtaining a representation of the resource by describing its primary access mechanism or network location. For example, the URL http://www.tno.nl/ is a URI that identifies a resource (the home page of the Netherlands Organization for Applied Scientific Research) and implies that a representation of that resource is obtainable via HTTP from a network host named www.tno.nl. A Uniform Resource Name (URN) is a URI that serves as a persistent location-independent resource identifier. The resource is identified by a name in a specific name space without implying its location or method of accessing it.

As known, there are several ways to identify a host in network data communication: e.g., by means of its hostname or by means of its IP address. People prefer the hostname identifier (e.g. www.tno.nl), while routers require fixed-length, hierarchically structured IP addresses (e.g. 192.87.96.136). The interface between these different preferences is the Domain Name System (DNS). The DNS is a hierarchical server system that maps domain names to network addresses. DNS is commonly employed by various applications, such as web browsers, to translate the hostnames supplied by people into IP addresses of the hosts providing the service (referred to as "name resolving" or "name look-up"), in order to let the routers be able to route traffic to the correct host. For network administrators and maintenance personnel a variety of well-known DNS name resolution utilities and DNS information look-up utilities are available, such as nslookup ("name server lookup)", "host", and "dig" (Domain Information Groper). The manner wherein DNS queries run over a large network, such as the Internet, is optimized in many ways, e.g., so as to distribute the domain name queries, for example, by using recursive and iterative queries, local, intermediate, root and authoritative name servers, etc.

In still another embodiment, the associating comprises consulting a rule base that specifies a rule associated with the identifier regarding the forwarding; identifying the rule; and communicating the information under control of the rule. The rule base may have rules specified by the user of the object so as to conditionally have the information or message send to specific parties registered by this user. The rules per user may determine which network address to use within what time slot and within what context. For example, a rule specifies whether or not to send the information by telephone to a specific party depending on the time of the day at the geographic location of the receiving party. As another example, a rule specifies that messages, originating at a transportation service and dealing with relevant delays, be sent as SMS to the mobile telephone of the user himself and also, during commute hours, to the telephone of his wife using synthesized speech or pre-recorded voice messages.

To illustrate the invention, consider the following scenario. A party is travelling and has been given a specific itinerary. The itinerary can be dynamically modified owing to changing circumstances that affect the traveller's schedule. Assume that the party has been provided an itinerary with arrival times and departure times of the trains (or airplanes) at certain railway stations (airports) between his/her start and destination. The user is to change trains (or planes) at a certain railway station (airport). Assume that the connecting train (or plane) at this railway station (or airport) has been delayed or has been cancelled. The itinerary is then to be modified so as to get the user to his/her destination, preferably with as little inconvenience to the user as possible. An update is therefore to be sent to the party so as to provide new directions, e.g., take another train or take a bus for the next leg of the trip, or wait for the next flight to an airport close to the final destination, etc., together with adjusted departure times and/or arrival times.

The inventors propose to locate the party based on an object that he/she carries with him/her. The object itself is not configured for network communication, but is electronically identifiable on the basis of its interaction with the user's environment, without needing to expose the identity or the contact information of the party him/herself. An example of such an object is a railway pass that is electronically checked by the station equipment when the user enters the platform (e.g., the Oyster card for the London metro) or by the conductor when the user is on the train. Another example of such object is the user's driver's license or passport or other identity card. The identity of these objects can be scanned-in by desk personnel or by an officer having mobile scanning equipment, e.g., a bar code reader, and an interface to a network for uploading the identifier of the object to the provider of the service in the invention, e.g., via the Internet. Yet another example is an electronic access card for getting access to a building or a site. Upon interaction between the card and a gate, it can be determined whether the user of the card is located within or without the guarded site.

As mentioned above, the party is located by means of the object's identifier upon its interaction with the environment. The term "locating" as used herein is meant to cover the step of determining the relevant ones of the identifiers to be used for initiating the process of communicating data or information. Referring to the examples above, the electronic checking of the railway pass, boarding pass, or another access card determines where in the accessed system the object is located and when: which train, which platform, which gate at the airport, inside or outside the guarded site, etc., and at what hour. This information is then used by the provider of the messages to identify the group of people to whom the messages are relevant.

Once a relevant identifier has been determined, the identifier is uploaded by the message provider to the service provider of the invention. The service provider associates the identifier with a network address to which the message is then routed.

The object's identifier can be uploaded together with further data indicative of the context of usage. For example, the further data authenticates the uploading party. The further data indicates, e.g., that the uploading party is a transportation service provider (e.g., metro operator). As another example, the uploading party is identified as a law enforcement officer or ambulance personnel. The further data may also include information added by the uploading party to define a context. For example, the metro operator adds an indication that the message to be delivered is about a current detour or a cancelled ride. The law enforcement officer may add an indication that the message is to be delivered to people present within a certain area and has a high priority (e.g., in case of a fire hazard). The ambulance personnel may add an indication for emergency and the message of emergency is to be delivered to another party, whose network address is listed by the identified party for being contacted in case of emergency. The context then can be used by the provider of the service in the invention to optimize delivery of the message.

As another example, cars are provided with transponders that interact via radio-frequency with sensors that register the time (and geographic location) of the cars. These transponders facilitate, e.g., automatic toll, fare or road tax collection. The registering of a car at a certain location at a certain time can in addition be used to automatically notify parties of the advance of the road trip. To this end, the operator of the transponder infrastructure forwards the transponder's identifier to the service provider of the invention, upon the transponder passing a certain sensor. The user of the car has subscribed to the service in the invention and has requested that a certain party (e.g., his wife) be kept informed about the progress of his current journey by messages to be sent to a certain network address. The service provider in the invention determines the network address on the basis of the transponder's identifier and communicates a (partly pre-composed) message with the content: "Hello honey, currently located at <name of location of sensor>" to this address.

As yet another example of a usage scenario, an identifiable object is a pass for access to, e.g., an exhibition, a music festival or a sports event, a theme park, a museum, etc. Each pass has a unique identifier. The user of the pass has registered the identifier with the service of the invention, preferably together with a profile in the form of rules so as to have the service provider in the invention filter messages that are broadcast to the audience attending the exhibition, festival, etc. Accordingly, upon detecting the presence of the pass the organizer may wish to communicate messages to the audience, or to a selected part of the audience. The organizer then uploads the identifiers and the relevant messages to the service provider in the invention. The service provider determines, based on the network addresses and rules per specific subscriber, what message goes where, if any, and in what format. In this role, the service provider of the invention serves as a communication broker and facilitates the task of the organizer in that the latter does not need to keep databases of network addresses and rules so as to efficiently target the audience with relevant information.

Different objects may, in real life, have been assigned a similar identifier. For example, a bank card and a railway pass may have identical registration numbers within their respective fields of application. Accordingly, merely using the registration number as identifier in the system of the invention, in order to have a message forwarded to the owner of the object, may lead to forwarding a message, intended for the owner of the railway pass, to the credit card owner. Accordingly, in a further embodiment of the invention the method further comprises receiving a context identifier together with the identifier; and the associating comprises using a combination of the identifier and the context identifier to determine the network address. The context identifier is, e.g., an identifier type, one or more keywords, a pre-determined label or acronym, etc.

### BRIEF DESCRIPTION OF THE DRAWING

The invention is explained in further detail, by way of example and with reference to the accompanying drawing, wherein:

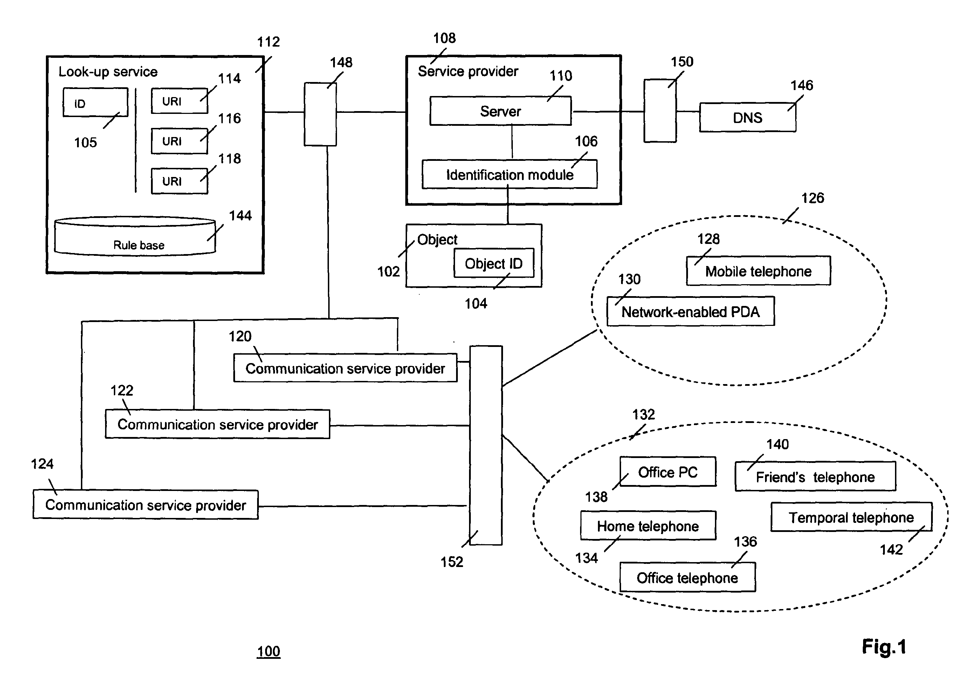

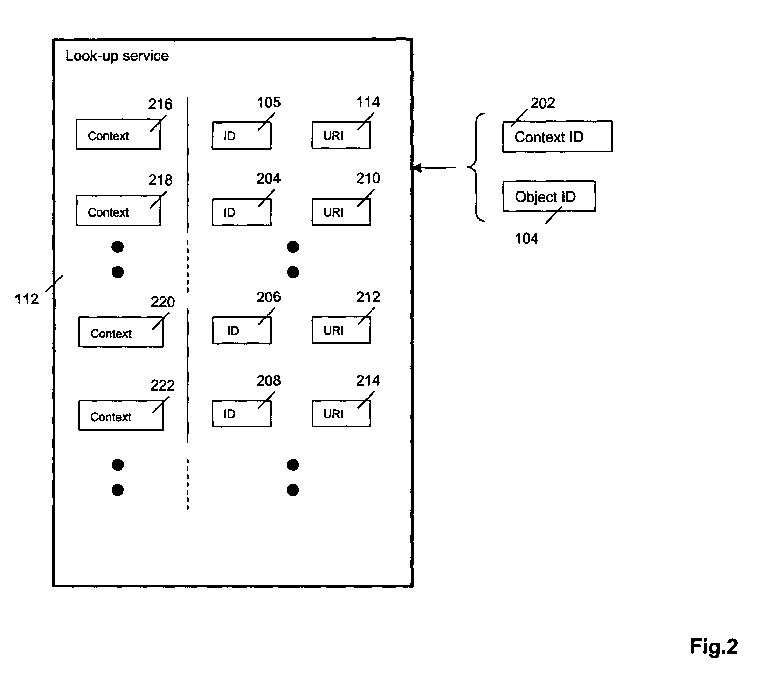

Figs. 1 and 2 are block diagrams of a system in the invention.
Throughout the Figures, similar or corresponding features are indicated by same reference numerals.

### DETAILED EMBODIMENTS

A service provider SP, who wants to send data in real-time to a personal communication device of a specific user U, needs to know: to which device the data is to be sent; what communication protocol to use; in what format the data is to be sent and presented at the user interface of the relevant device. The same applies to users who want to send messages to user U. The presence and the specific configuration of the devices and resources available to user U for receiving the data and/or messages in general change over time and with geographic location of user U. The invention now seeks to solve the problem of determining a suitable user device, a suitable protocol and format, in dependence on the specific characteristics such as availability and configuration of the devices of user U.

The inventors propose to locate user U based on an object O that user U carries with him/her. Object O itself is not configured for network communication, but is identifiable on the basis of its electronic or electromagnetic interaction with equipment in the environment of user U, or on the basis of a physical interaction, e.g., manual interaction, of user U with such equipment.

Upon detecting the presence of object O within the system through this interaction, service provider SP knows that a person (user U) with this object is present in the system. In order to notify user U of events relevant to him/her, service provider SP uploads the object's identifier OId to a service SR (which may or may not be operated by service provider SP) that is capable of associating a network address with this identifier. The message from service provider SP about the event is then routed to the network address.

Fig. 1 is a block diagram of an embodiment of a system 100. System 100 comprises an object 102 that is electronically identifiable through its object identifier 104 by an identification module 106, e.g., within a service region of a service provider 108. Provider 108 conditionally sends messages to devices of the users, whose objects have been identified by identification module or hardware reader 106. The conditions depend on the very context of the usage of object 102, examples of which are discussed throughout this description. To this end, provider 108 has its server 110 send object identifier 104 (and the identifiers of other identified similar objects (not shown)), to a look-up service 112.

Look-up service 112 has listed an identifier 105 as associated with one or more Uniform Resource Identifiers (URIs), e.g., URI 114, URI 116, ..., and URI 118. Assume now that object identifier 104 matches identifier 105.

One way to determine that identifiers 104 and 105 match is to check whether they are identical. Another way to determine that identifiers 104 and 105 match is to determine whether there is a registered relationship between them. For example, an OV-chipcard (Dutch railway pass) with serial number 12345 matches with MIFARE card NXP 12345678 (the smart card integrated in the railway pass). This matching may also be done by yet another service.

Each specific one of URIs 114-118 comprises a further identifier of a specific one of one or more communication service providers 120, 122, ..., and 124. It is assumed that object 102 is with a user, who has subscribed to the communication services of providers 120-124. Each URI can optionally be registered with control information that enables the relevant communications service provider to route messages to the mobile personal communication equipment 126 of the user of object 102, e.g., mobile telephone 128 or network-enabled PDA 130, or to other communication equipment 132 associated with this specific user and with a relevant one of providers 120-124. The associations between the user of object 102 and the communications equipment suitable for this user can be inferred from, e.g., the user's subscription to one or more of communication services 120-124. For example, a service provider for mobile telephony or an email service provider has a register of the names and billing addresses of their subscribers, together with their telephony network addresses or their email network addresses tied to the subscriber's equipment 128 and 130. The associations between the user of object 102 and his/her personal communications equipment 128 and 130, and with other communications equipment 132, e.g., his/her home telephone 134, office telephone 136, network-enabled office PC 138, or a friend's mobile phone 140, can also have been declared by the user of object 102 upon registering with service 112. In addition, the user of object 102 has temporarily registered another party's telephone 142 with service 112 for having this party conditionally notified by provider 106. Conditions may have been specified by the user of object 102 in a rule base 144 with entries for object identifier 104. The conditions specify, for example, to which device of equipment 126 and 132 to send the notification and under what circumstances such as time of the day, day of the week. Note that object 102 itself may inherently define the context of usage of object 102. For example, an access card interacts with its environment at the entrance or exit of the premises to which a valid card gives access (buildings, railway or metro platforms). As another example, passports or driver licenses typically interact with their environment (electronically or by having them scanned optically) at check points such as boarding gates at airports, or customs desks. Their barcodes can be scanned in by a bar code reader or their other identifiers can be electronically extracted by equipment of authorized personnel. Driver licenses are also used to validate checks or payments at stores in some countries. Their registration numbers can be scanned in.

Once server 110 has obtained, or otherwise determined, the relevant URI, e.g., URI 114, server 110 uses the Domain Name System (DNS) 146 in order to find the relevant server of the relevant communication service provider, e.g., server 120. Server 120 is then used to route the relevant message from provider 108 to the communication equipment listed for the user of identified object 102.

As mentioned, the user of object 102 may have available a plurality of communication devices to which a message can be forwarded by service 112. The plurality of communication devices of a specific user is often referred to as "personal network" (PN), and the service carrying out the administrative aspects for a PN is often referred to as a personal network provider (PNP). A PNP is, e.g., one or more of communication providers 120-124. A PNP has information about which devices belong to what PN. Optionally, a PNP may be able to determine the geographical position of one or more specific ones of the devices, e.g., if specific device uses a cellular communication network in operational use, or if the device has a GPS navigational aid onboard and reports its location to the PNP. Optionally, the PNP has information about the status of the devices, e.g., whether it has been turned-on or turned-off, whether is has been reported as stolen or lost, etc. The PNP itself may use this information to choose the most suitable one of the devices of the user of object 102 in order to forward the message as received from service 112. For example, based on the information currently available to the PNP, the message is forwarded to the user's email address instead of to the user's mobile phone if the latter is turned off. Optionally, the PNP may convert the message received from service 112 into another format more suitable for the circumstances. For example, the message as received is a text message in a natural language, and the PNP converts it into speech for having it send to the user's voicemail.

In another scenario, the PN only includes a single communication device. Then, a PNP may be absent. The relevant URI associated with object identifier 104 does then not refer to a generic PNP, but to the device itself on the service provider's network.

In Fig.1, components 148, 150 and 152 represent communication networks throughout system 100 in order to functionally interconnect the various entities involved in the method of the invention. Networks 146-150 include, e.g., the Internet or another data network, the public switched telephone network (PSTN), or any other network for electronic or electrical data exchange, or any combination thereof.

Fig.2 is a block diagram of a portion of system 100 in a further embodiment of the invention. In this further embodiment, object identifier 104 as received by look-up service 112 is accompanied by a context identifier, e.g., added by the party who has uploaded object identifier 104, or inferred by look-up service 112 from a known identify of the uploading party, or determined on the basis of additional information supplied by the uploading party. A context identifier enables, e.g., to remove ambiguities as to which network address is to be chosen if object identifier 104 happens to occur more than once in look-up service 112, and each time with a different network address. A context identifier further prevents the message to be forwarded to a receiving party, who happens to be listed in service 112 with the same object identifier but for a totally different object. The role of context identifiers is illustrated below in more detail.

Examples of identifiers of nine digits have been issued by the relevant authorities: a US passport number; an employee number at a certain company; a ABA routing number (ABA stands for the American Banking Association, and the ABA number is being used for money transfers); a US social security number; a Dutch social-fiscal (sofi) number; a telephone number in Prague, Czechoslovakia; a bank card, a railway pass, etc. Assume now that look-up service 112 receives the request to forward a message to the network address corresponding to an object identifier 104 of a certain sequence of nine digits.

Consider the example wherein look-up service 112 identifies multiple entries for the same particular identifier, each listed with a different network address. For example, one entry is associated with a URI of a banking environment as the corresponding identifier originates from a banking card, and the other entry is associated with a URI of a railway transportation system as the corresponding identifier originates from a railway pass. That is, the string of numerical values representing the bank card number being used as object identifier is identical to the string of numerical values representing the railway pass number being used as object identifier. If service 112 identifies multiple entries for the same string of characters used as an identifier, service 112 may decide to not proceed any further in the absence of further information, as the intended destination for this message cannot be determined unambiguously from the identifier alone.

Consider the example wherein only a single entry is present in look-up service 112 for a particular identifier as received. For example, the entry is associated with a URI of a railway transportation system as the corresponding identifier originates from a railway pass. The string of numerical values representing the railway pass number is unique within service 112. The object identifier received at service 112 has the same identical string of numbers. However, the string received has originated from a bank card of a user totally different from the user of the railway pass. It would be highly confusing to have the message forwarded to the user of the railway pass if the message is intended for the user of the bank card.

In view of above two examples, preferably, a context identifier 202 is determined for use with object identifier 104 in look-up service 112 so as to enable service 112 to identify the appropriate URI, if any. That is, object identifier 104, as received by look-up service 112, is combined with additional information in order to find an, at least plausible, URI, if any is associated with an entry identical to object identifier 104.

In look-up service 112, IDs 105, 204, 206 and 208 are associated with URIs 114, 210, 212 and 214, respectively. Service 112 has associated with each of identifiers 105, 204-208 a respective context 216, 218, 220 and 222. Contexts 216-222 include, e.g., keywords representative of the specific usage that is made of an object with the relevant object identifier or keywords representative of the relationship between the objects and the party submitting a request to forward a message to an owner of a certain object.

Contexts 216-222, as listed at service 112, can be determined in a variety of ways. For example, parties have registered with service 112 in advance and have provided the identifiers 105, 204-208, the data representative of the associated URIs 114, 210-214, as well as contexts 216-222. The registering parties provide contexts 216-222, e.g., as identifier types, together with the identifiers. For example, Dutch commuters often have purchased a pass for public transportation that is valid for, e.g., one year. In Dutch, such pass is referred to as "OV-jaarkaart". An OV-jaarkaart gives its owner access to all means of public transportation in the Netherlands, e.g., bus, train, metro, streetcar, and ferryboat, without any additional fees. The party issuing the OV-jaarkaart could register its registration number together with the identifier type "OV" or "OV-kaart". A passport or driver license could be listed with its registration number together with an identifier type "passport" or "driver license". A credit card or bank pass could be listed with its serial number together with an identifier type in the form of, e.g., an acronym representative of the issuing institution and having a sufficient number of characters to be differentiating in operational use of the system in the invention. Alternatively, the parties provide contexts 216-222, e.g., in the form of keywords. In the example of the requesting party being a railway service, the keywords include, e.g., "railway pass", "train", "station", "Intercity" or another term typically used in a railway-related environment. In the example of the requesting party being a bank or another finance-related entity, the keywords include, e.g., "financial", "banking", "money transfer" or "bank card". For the other examples listed above for the nine-digits identifiers, the context can semantically be interpreted as "passport"; "<name of the company>"; "social security"; "sofi"; "tel.no.". These keywords are, e.g., inserted in a subject header of the request for message-forwarding as submitted by the party to service 112. Alternatively, the registered parties have selected one or more contexts pre-determined by service 112 for being associated with their future requests for message-forwarding. The contexts may then be in the form of keywords as well, or may be in the form of a string of symbols using another predetermined classification scheme. The parties, who submit requests for message forwarding, then submit the relevant contexts as well. Alternatively, the context is determined by the identity of the party. For example, if the party having registered with service 112 is a national railway service, the context for a particular identifier to be submitted by this party is listed in service 112 as "railway-related".

Upon receipt of object identifier 104, service 112 checks if the same identifier is listed in its database. If the same identifier is not listed, then the party submitting object identifier 104 needs to be notified of the fact that no such identifier exists in the database of service 112. As a result, a message cannot be forwarded. If the same identifier does exist in the database of service 112, service 112 determines context identifier 202 as associated with received object identifier 104. If context identifier 202 is in the form of a keyword or a string of symbols received from the requesting party and listed within the database of service 112, service 112 checks if this context identifier is indeed associated with an identifier, e.g., identifier 105, being listed in the database and being the same as object identifier 104. If context identifier 202 is determined based on the identify of the requesting party, service 112 likewise checks if this context identifier is indeed associated with identifier 105 being listed in the database and being the same as object identifier 104. Alternatively, context identifier 202 is inferred from the contents of the individual message that service 112 is requested to forward. The message is typically in a natural language, and tools are known to analyse natural language texts. For example, computational linguistics has developed algorithms and software for processing natural language data based on statistical and rule-based modelling. Again, upon thus having determined context identifier 202, service 112 likewise checks if this context identifier is indeed associated with identifier 105 being listed in the database and being the same as object identifier 104.

If object identifier 104 as received matches identifier 105 as listed, and if context identifier 202 matches context 216, service 112 initiates the process of forwarding the message as discussed under Fig.1 above.

Instead of using a context identifier 202, one could also use a hardware identifier. Assume that identifier 105 matches the combination of the object identifier 104 and a hardware-type identifier. The hardware identifier assumes the role played by context identifier 202 in above scenario. Examples of hardware identifiers are: mifarenxp,_MF1ICS50, IEEE-mac, Bluetooth-mac address, etc. Requirements for hardware identifiers are that these render the combination of a specific object identifier and a specific hardware identifier unique worldwide. That is, it is unmistakable that there is only one object in the world with that object identifier- hardware type identifier combination. A regulating party is needed (e.g., IEEE or the manufacturer) that assigns these identifiers. This guarantees that the identifier is unique. In case of the MIFARE card, NXP (the manufacturer) is the regulating authority, so NXP is preferably mentioned as well in the hardware id.

Objects which do not have an identifier assigned by a regulating party cannot be used, as identifier clashes will break the functioning of look-up-service 112. By referring to the hardware identifier, confusion is avoided about which card is used in which context. This also makes it possible to travel (public transport context) with one's bankcard (financial context).

The hardware identifier can be derived by server 110 from the type of identification module or hardware reader 106. Hardware reader 106 must know which type it is, otherwise it cannot read it. Server 110 knows from which reader it receives the information. Therefore server 110 can send the hardware identifier and the object identifier to look-up-service 112 for further processing.

## Claims

1. A method of providing a service on a communication network, the method comprises:
receiving an identifier (104) of an object (102) that is not configured for communicating with the network;
receiving a request for delivering a message to a party associated with the identifier; associating the identifier with a network address; and
forwarding the message to the network address.

2. The method of claim 1, wherein the associating comprises:
consulting a data base (112) that associates the identifier with at least one URI; and
determining via DNS (146) a network address on the basis of the URI.

3. The method of claim 1, wherein the associating comprises:
consulting a rule base (144) that specifies a rule associated with the identifier and regarding the forwarding;
identifying the rule; and
forwarding the message under control of the rule.

4. The method of claim 1, wherein:
the method further comprises receiving a context identifier (202) together with the identifier; and
the associating comprises using a combination of the identifier and the context identifier to determine the network address.
